# EUROPÄISCHE PATENTSCHRIFT

(11) **EP 3 556 531 B1**
(45) Veröffentlichungstag und Bekanntmachung des Hinweises auf die Patenterteilung: **09.06.2021**
(21) Anmeldenummer: 19167662.6
(22) Anmeldetag: 05.04.2019
(51) Int. Cl.: B29C 45/16, B29C 45/14, B29C 44/12, B29K 75/00, B29L 31/30, B60J 5/10, B60J 5/04, B29C 44/08

(54) **VERFAHREN ZUR HERSTELLUNG EINES VERSTÄRKENDEN BAUTEILS**
METHOD FOR MANUFACTURING A REINFORCING COMPONENT
PROCÉDÉ DE FABRICATION D'UN COMPOSANT RENFORCÉ

(30) Priorität: 16.04.2018 DE 102018205733
(43) Veröffentlichungstag der Anmeldung: 23.10.2019
(73) Patentinhaber: Magna Exteriors (Bohemia) s.r.o., 460 06 Liberec (CZ)
(72) Erfinder: PUTA, Josef, 46804 Jablonec nad Nisou (CZ); ZDÁRSKÝ, Radim, 463 12 Liberec 25 (CZ)
(74) Vertreter: Rausch, Gabriele

(56) Entgegenhaltungen:
- DE-A1-102009 019 236
- DE-T5-112006 002 513
- JP-A- 2015 020 343

## Beschreibung

Die Erfindung betrifft ein Verfahren zur Herstellung eines verstärkenden Bauteils

### Stand der Technik

Faserverbundwerkstoffe bieten aufgrund ihrer hohen spezifischen Eigenschaften großes Leichtbaupotenzial. Vor allem in der Luft- und Raumfahrtindustrie werden kohlefaserverstärkte Werkstoffe seit Jahrzehnten eingesetzt. Mit der steigenden Marktnachfrage des letzten Jahrzehnts sind Verstärkungsfasern preislich auch für den Maschinen- und Anlagenbau sowie für den Automobilbereich interessant geworden. Eine Motivation für den Einsatz dieses neuen Werkstoffes sind vor allem die hohen mechanischen Belastbarkeitseigenschaften von Faserverbundwerkstoffen bei gleichzeitig geringer Dichte.

So können Strukturen leichter gebaut und somit effizienter genutzt werden. Im klassischen Leichtbau werden meist Hohlprofile aber auch geschäumte Profile eingesetzt.

Komplex geformte Bauteile werden heute meist in zweischaliger Bauweise gefertigt und später verklebt. Beispiele hierfür sind in großer Zahl im Automobilbereich zu finden. Problematisch ist jedoch dabei die Durchtrennung oder Nicht-Durchgängigkeit der lasttragenden Fasern. Die positiven Eigenschaften der Fasern können so nicht voll ausgeschöpft werden, was zu höherem Gewicht und geringerer Dauerfestigkeit führt.

Ein Beispiel aus dem Automobilbau stellen Heckklappen von Fahrzeugen dar. Diese Heckklappen, die vormals aus Metall gefertigt wurden und mit einem Kunststoffeinbau innen kaschiert waren, werden in zunehmendem Maße aus Kunststoff gefertigt. Zur Versteifung dienen dabei im Stand der Technik immer noch metallische Rahmenstrukturen die mit einem flächigen Trägerteil aus Kunststoff verbunden sind. Vorzugsweise werden die Rahmenstrukturen verklebt.
Das Trägerteil mit der Rahmenstruktur wird anschließend mit Verkleidungsteilen, sowie einer Heckscheibe verbunden.

Aus der DE 10 2009 019 236 A1 ist ein Verfahren zur Herstellung eines Faserverbundbauteils bekannt, bei welchem zumindest ein Kernelement mit Fasern umflochten und mit einem Kunststoff versehen wird. Dabei ist vorgesehen, dass das mit den Fasern umflochtene Kernelement in einem Spritzgießverfahren umspritzt wird. Mittels des Spritzgießverfahrens ist es somit ermöglicht, das mit den Fasern umflochtene Kernelement mit Funktionselementen zu versehen, wodurch ein Funktionserfüllungsumfang des hergestellten Faserverbundbauteils deutlich erhöht ist. Bei derartigen Funktionselementen handelt es sich beispielsweise um Befestigungsvorrichtungen wie Haken, Klipse oder Steckverbindungsvorrichtungen oder etwa um Öffnungen oder Gewindeöffnungen, mittels welchen am Faserverbundbauteil andere Funktionsbauteile der Karosserie des Personenkraftwagens angebracht werden können beziehungsweise das Faserverbundbauteil selbst an der Karosserie des Personenkraftwagens oder an anderen Bauteilen derselbigen angebracht und mit diesen verbunden werden kann. Dem entsprechend sind beispielsweise auch Funktionsflächen mittels des Spritzgießverfahrens ausbildbar, an welchen anderweitige Bauteile befestigbar und/oder ausrichtbar sind. Es kommen dabei metallische Einleger zum Einsatz.

Es ist Aufgabe der Erfindung ein Bauteil für ein Fahrzeug aus Verbundmaterial herzustellen, das optimale Eigenschaften für eine Verstärkungsaufgabe besitzt und leicht herstellbar ist. Dabei gilt es den metallischen Rahmen durch ein Verbundmaterial zu ersetzen.

### Beschreibung der Erfindung

Die Aufgabe wird gelöst mit einem Verfahren zur Herstellung eines verstärkenden Bauteils aus unterschiedlichen Materialien, wobei in einem ersten Schritt das Bauteil in einem ersten Werkzeug durch Reaktions-Spritzgießen mit Verschäumen des verwendeten Kunststoff-Materials und durch Reduktion großer Querschnitte des Bauteils durch Einlegeteile aus demselben Kunststoff-Material hergestellt wird, wobei in einem zweiten Schritt das Bauteil mit mindestens einem Fasertyp umwickelt wird und wobei das Bauteil im dritten Verfahrensschritt gesamt in einem zweiten Werkzeug mit Kunststoff eines zweiten Kunststoff-Materials umspritzt, bzw. konsolidiert/ durchgedrungen wird.

Dieser Herstellungsprozess reduziert die Taktrate sehr effizient, da die auf geschäumten Kunststoffvolumina reduziert sind.

Es ist dabei von Vorteil, dass die Einlegeteile jeweils im ersten Verfahrensschritt mit hergestellt werden. Dadurch benötigt man keine weitere Herstellungsstraße für Einlegeteile.

Besonders effizient läuft das Herstellungsverfahren, wenn die Einlegeteile jeweils aus dem jeweilig vorhergehenden Herstellungsprozess entnommen werden.

Nach dem Durchlauf des ersten Produktes im Herstellungsverfahren und damit der Herstellung der ersten Einlegeteile, werden in jedem Durchlauf im Herstellungsverfahren die Einlegeteile des jeweiligen vorher durchlaufenden Verfahrens verwendet.

Es ist dabei von Vorteil, wenn die Einlegeteile den Querschnitt in einem Bereich des Bauteils den großem Querschnitt des Bauteils bis zu einem Wert von 50 % ausfüllen. Dadurch bleibt nur ein geringes Volumen, das nach dem Ausschäumen mit Kunststoff ausgehärtet werden muss.

Vorteilhafterweise werden die Einlegeteile in einer Position des Bauteils mitgespritzt und geschäumt, an der das Bauteil in seinem Querschnitt geringer als der größte Querschnitt ist.

Es ist dabei von Vorteil, dass der Querschnitt des Bauteils an der Position im etwa dem Querschnitt des Einlageteils entspricht.

Das Verfahren ist besonders vorteilhaft darin, ein Bauteil herzustellen, das ein Rahmen einer Fahrzeugtür oder Fahrzeugklappe, Frontendmodul oder Seitentür ist.

Vorteilhafterweise wird dann das Bauteil in einem Verbund auf weiteren Kunststoffkomponenten verbaut.

### Beschreibung der Ausführungsbeispiele

Die Erfindung wird nachfolgend beispielhaft unter Bezugnahme auf die beigefügte Zeichnung beschrieben.
Fig. 1 zeigt eine schematische Darstellung einer beispielhaften Ausführungsform einer Heckklappe,
Fig. 2 zeigt ein beispielhaftes Herstellungsverfahren
Fig. 3 zeigt einen Rahmen in Aufsicht und in einem Querschnitt,
Figur 4 zeigt den Rahmen mit Einlegeteilen nach der Herstellung und im Folgeprodukt.

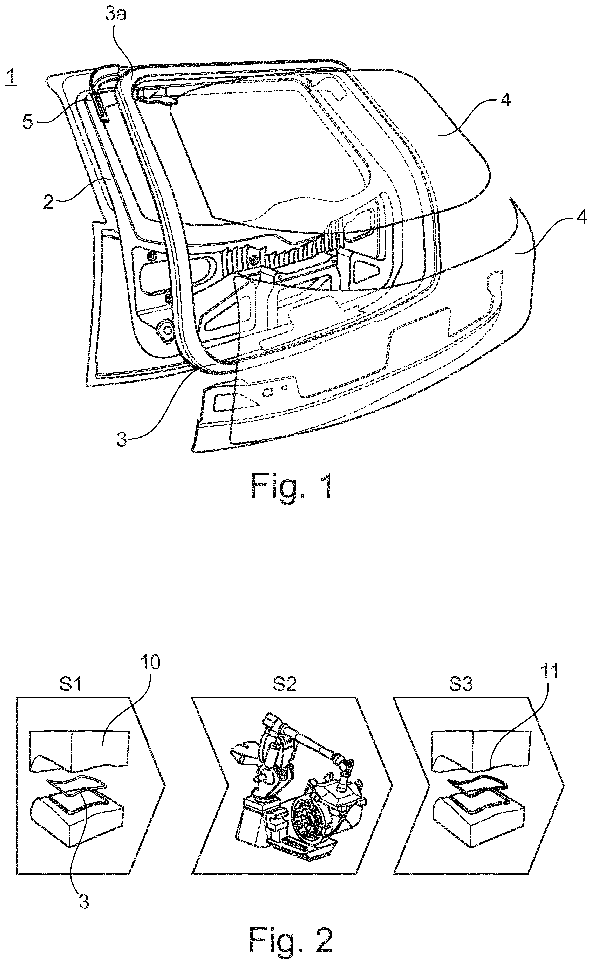

In Figur 1 sind die Hauptbestandteile einer Heckklappe 1 dargestellt. Als Basis der Heckklappe dient ein Trägerteil 2, dass aus faserverstärkten Kunststoffen hergestellt ist. Der versteifende Rahmen 3 ist eine geschlossene Form oder auch eine nichtgeschlossene, beliebige Form aus einem Polyurethan-Material oder andere Verbundmaterialien wie Epoxy oder Vinyl-Esther. Die Verkleidungsteile 4 werden mit dem Trägerteil 2 verbunden. Zur Versteifung der Heckklappe sind Versteifungselemente 5 vorgesehen, die in diesem Ausführungsbeispiel aus Metall hergestellt sind. Sie werden getrennt mit dem Trägerteil 2 verbunden.

In Figur 2 wird der Herstellungsprozess des Rahmens 3 in drei maßgeblichen Verfahrensschritten dargestellt. Im Schritt S1 wird der Kern 3 aus PU- Schaum hergestellt, wobei man eine steife Form erhält. Der Rahmen wir dabei in einem Werkzeug 10 gespritzt und geschäumt
Im zweiten Verfahrensschritt S2 wird der geschäumte Rahmen 3 mit Glasfasern oder Karbonfasern in einem Endlosprozess mit einer Wickelmaschine umwickelt. Anschließend wird der mit den Fasern umwickelte Rahmen 3 mit PU-Material in einem weiteren Werkzeug 11 in einem dritten Verfahrensschritt S3 mit Kompositmaterial, wie Epoxy oder Vinyl-Esther, konsolidiert und/oder durchgedrungen wird. Dabei kann dasselbe Kunststoffmaterial wie im ersten Verfahrensschritt S1 oder auch ein anderes Kunststoffmaterial verwendet werden.

Wenn man vermeiden möchte, metallische Versteifungselemente 5 zu verwenden, muss der Rahmen 3 gerade im Bereich 3a der Oberkante der herzustellenden Heckklappe eine erhebliche Dicke bzw. einen großen Querschnitt 20 aufweisen. Diese große Materialdicke muss sich nicht über den gesamten Rahmen erstrecken, da die Anforderung an den Rahmen nicht über die gesamte Rahmenlänge gleich ist. Daher wird der Rahmen so ausgelegt, dass der Querschnitt des Rahmens über die Rahmenlänge deutlich variiert und nur im Bereich hoher mechanischer Belastung vergrößert ist.
Der Querschnitt des Rahmens verändert sich dabei von einem großen Querschnitt 20 bis zu einem geringen Querschnitt 21.

Aber bei großen unterschiedlichen Querschnitten des Bauteils muss bei der Herstellung des geschäumten Kunststoffs abgewartet werden, bis der Bereich größter Dicke komplett über den gesamten Querschnitt aushärtet. Dadurch wird die Taktzeit bei der Herstellung des Rahmens im Schritt S1 sehr lang und ist für die industrielle Fertigung ein Problem.

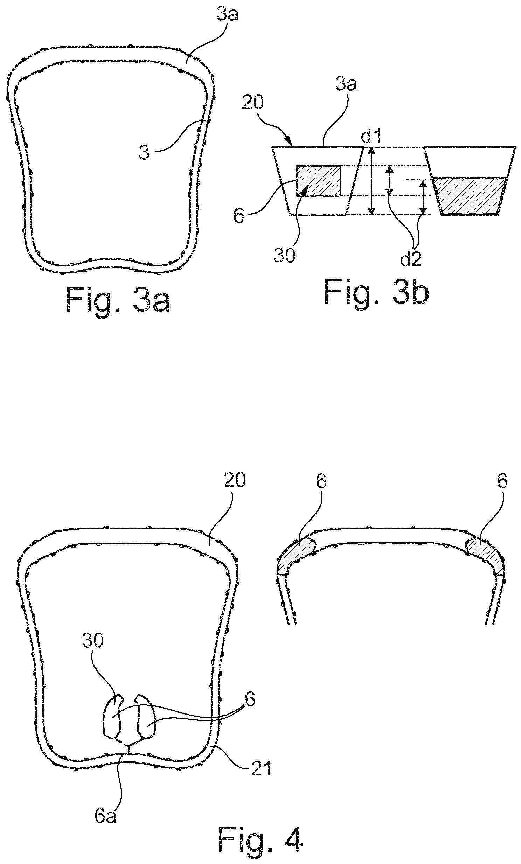

Man geht das Problem an, indem man Einlageteile 6 in das Werkzeug 10 für das Schäumen des Rahmens einbringt. Durch die Einlegeteile 6 wird der große Querschnitt 20 des Rahmens im Bereich 3a der großen Dicke d1, der im Schäumprozess aushärten muss, reduziert. Es bleibt, wie in Figur 3 gezeigt, eine Restdicke zwischen Einlegeteil 6 und der Außenfläche des Rahmens 3, die aushärten muss. Die Einlegeteile 6 sind dabei bevorzugt aus demselben Material wie der Rest des Rahmens 3.
Die Einlegteile 6 müssen für den jeweiligen Verfahrensschritt S1 zur Verfügung stehen.

Daher werden bei der Herstellung, im ersten Verfahrensschritt S1 Einlageteile 6 aus PU-Schaum mit dem Rahmen 3 zusammen in einem Werkzeug 10 hergestellt. Die Form des Werkzeugs des Rahmens 3 wird dabei so erweitert, dass, wie im Beispiel der Figur 4 zu sehen ist, zwei Einlageteile 6 im unteren Bereich 6a des Rahmens 3 mit PU Material mit gegossen und ausgeschäumt werden. Die Positionierung der Einlegeteile 6 ist dabei bevorzugt am Ende des Materialfließweg, das heißt, dass von dem Einspritzpunkt des Werkzeugs im Bereich 3a in der gegenüberstehenden Kavität die Einlageteile 6 mit dieser geringeren Dicke d2 hergestellt werden. Als Ausführungsbeispiel-sind die Einlageteile in einem Bereich 6a positioniert, in dem der Rahmen 3 einen kleinen Querschnitt 21 aufweist und die Einlageteile 6 mit dieser geringere Dicke d2 hergestellt werden. Die Form und Größe der Einlegeteile muss dabei dem Bereich 3a des Rahmens entsprechen. In der Figur 3a ist dabei nur beispielhaft ein rechteckiger Querschnitt eingezeichnet. In diesem Beispiel "schwimmt" das Einlegeteil 6 im Material des Reaktionsgießprozess. In Figur 3b dagegen wird die Form etwa zur Hälfte vom Einlegeteil 6 ausgefüllt und das Einlageteil liegt mit mindestens einer Seite direkt an der Wandung des Werkzeugs an. Es ist möglich, dass drei Außenseiten des Einlageteils direkt an der Wandung des Werkzeugs anliegen.

Die Einlageteile 6 werden nach der Entnahme des Rahmens 3 aus dem Werkzeug 10 vom Rahmen 3 entfernt und die Anguss-Verbindungen abgenommen. Der Rahmen 3 wird wie oben beschrieben weiterverarbeitet.

Für den nächsten Rahmen 3 werden im Prozessschritt S1 die Einlageteile 6 aus dem vorhergehend abgelaufenen Prozessschrittes S1 verwendet und in das Werkzeug 10 des Rahmens 3 eingelegt. Da es sich bei dem Material der Einlageelemente 6 um dasselbe Kunststoffmaterial handelt, werden die Einlageelemente 6 ohne Probleme vom PU-Schaum umgeben und integriert. Dadurch wird im Bereich der größten Dicke d1 des Rahmens 3 nur noch eine geringe Schaumdicke nämlich d1-d2 ausgehärtet. Die Taktzeit kann deutlich reduziert werden.

### Bezugszeichenliste

1 Bauteil
2 Trägerteil
3 Rahmen
3a Bereich
4 Verkleidungsteil
5 Verstärkungsteil
6 Einlegeteile
6a Bereich
10, 11 Werkzeuge
20 großer Querschnitt
21 geringerer Querschnitt
d1, d2 Dicken

## Patentansprüche

1. Verfahren zur Herstellung eines verstärkenden Bauteils aus unterschiedlichen Materialien,
- wobei in einem ersten Schritt (S1) das Bauteil in einem ersten Werkzeug (10) durch Kunststoffspritzguss mit Verschäumen des verwendeten Kunststoff-Materials hergestellt wird,
- wobei in einem zweiten Schritt (S2) das Bauteil mit mindestens einem Fasertyp umwickelt wird,
- und wobei das Bauteil im dritten Verfahrensschritt (S3) gesamt in einem zweiten Werkzeug (11) mit Kunststoff eines zweiten Kunststoff-Materials umspritzt oder konsolidiert oder durchgedrungen wird, **dadurch gekennzeichnet, dass** das Bauteil im ersten Schritt hergestellt wird, in dem durch Einlegeteile (6) aus demselben zum Verschäumen verwendeten Kunststoff-Material eine Reduktion großer Querschnitte des Bauteils erreicht wird und
dass die Einlegeteile (6) jeweils im ersten Verfahrensschritt (S1) mit hergestellt werden.

2. Verfahren nach Anspruch 1 **dadurch gekennzeichnet, dass** die Einlegeteile (6) jeweils aus dem jeweilig vorhergehenden Herstellungsprozess (S1-S3) entnommen werden.

3. Verfahren nach einem der vorhergehenden Ansprüche, **dadurch gekennzeichnet, dass** die Einlegeteile (6) den Querschnitt in einem Bereich (3a) des Bauteils den großen Querschnitt (20) des Bauteils bis zu einem Wert von 50 % ausfüllen.

4. Verfahren nach einem der vorhergehenden Ansprüche, **dadurch gekennzeichnet, dass** die Einlegeteile (6) in einer Position (6a) des Bauteils mitgespritzt und geschäumt werden, an der das Bauteil in seinem Querschnitt (21) geringer als der größte Querschnitt (20) ist.

5. Verfahren nach Anspruch 4, **dadurch gekennzeichnet, dass** der Querschnitt (21) an der Position (6a) in etwa dem Querschnitt (30) des Einlegeteils (6) entspricht.

## Claims

1. Method for manufacturing a reinforcing component from different materials,
- wherein, in a first step (S1), the component is manufactured in a first mould (10) by plastics injection-moulding with foaming of the plastics material used,
- wherein, in a second step (S2), at least one type of fibre is wound around the component,
- and wherein, in the third method step (S3), the component as a whole is overmoulded or consolidated or penetrated with plastic of a second plastics material in a second mould (11), **characterized in that** the component is manufactured in the first step, in which a reduction of large cross sections of the component is achieved by insert parts (6) of the same plastics material used for the foaming, and
**in that** the insert parts (6) are in each case also manufactured in the first method step (S1).

2. Method according to Claim 1, **characterized in that** the insert parts (6) are in each case taken from the respectively preceding manufacturing process (S1-S3).

3. Method according to either of the preceding claims, **characterized in that** the insert parts (6) fill the cross section in a region (3a) of the component up to a value of 50% of the large cross section (20) of the component.

4. Method according to one of the preceding claims, **characterized in that** the insert parts (6) are also moulded and foamed in a position (6a) of the component at which the component is smaller in its cross section (21) than the largest cross section (20).

5. Method according to Claim 4, **characterized in that** the cross section (21) at the position (6a) corresponds to approximately the cross section (30) of the insert part (6).

## Revendications

1. Procédé de production d'un élément de renforcement à partir de différents matériaux,
- dans une première étape (S1) le composant étant réalisé dans un premier outil (10) par moulage par injection de matière synthétique avec moussage du matériau utilisé à base de matière synthétique,
- dans une deuxième étape (S2) le composant étant enveloppé avec au moins un type de fibre,
- et dans la troisième étape de procédé (S3) le composant étant complètement surmoulé ou consolidé ou pénétré avec une matière synthétique d'un deuxième matériau à base de matière synthétique dans un deuxième outil (11), **caractérisé en ce que** le composant est réalisé dans la première étape, dans laquelle une réduction de grandes sections transversales du composant est obtenue par des inserts (6) en le même matériau à base de matière synthétique utilisé pour le moussage, et
**en ce que** les inserts (6) sont chacun également réalisés dans la première étape de procédé (S1).

2. Procédé selon la revendication 1, **caractérisé en ce que** les inserts (6) sont chacun issus du procédé de fabrication précédent respectif (S1-S3).

3. Procédé selon l'une des revendications précédentes, **caractérisé en ce que** les inserts (6) remplissent la section transversale dans une zone (3a) du composant et la grande section transversale (20) du composant jusqu'à une valeur de 50 %.

4. Procédé selon l'une des revendications précédentes, **caractérisé en ce que** les inserts (6) sont injectés et moussés dans une position (6a) du composant où le composant a une section transversale (21) inférieure à la plus grande section transversale (20).

5. Procédé selon la revendication 4, **caractérisé en ce que** la section transversale (21) à la position (6a) correspond à peu près à la section transversale (30) de l'insert (6).
